(19) Europäisches Patentamt
European Patent Office
Office européen des brevets

(11) **EP 1 474 877 B1**

(12) **FASCICULE DE BREVET EUROPEEN**

(45) Date de publication et mention de la délivrance du brevet:
**22.06.2005 Bulletin 2005/25**

(21) Numéro de dépôt: **03715076.0**

(22) Date de dépôt: **07.02.2003**

(51) Int Cl.[7]: **H04B 7/08**, H04L 27/26

(86) Numéro de dépôt international:
**PCT/FR2003/000405**

(87) Numéro de publication internationale:
**WO 2003/069802 (21.08.2003 Gazette 2003/34)**

(54) **DISPOSITIF MODULAIRE DE RECEPTION EN DIVERSITE D'UN SIGNAL MODULE**

MODULAR AUFGEBAUTE VORRICHTUNG ZUM DIVERSITÄT-EMPFANG EINES MODULIERTEN SIGNALS

MODULAR DEVICE FOR MULTIPLE RECEPTION OF A MODULATED SIGNAL

(84) Etats contractants désignés:
**AT BE BG CH CY CZ DE DK EE ES FI FR GB GR HU IE IT LI LU MC NL PT SE SI SK TR**

(30) Priorité: **13.02.2002 FR 0201779**

(43) Date de publication de la demande:
**10.11.2004 Bulletin 2004/46**

(73) Titulaire: **Dibcom**
**91120 Palaiseau (FR)**

(72) Inventeurs:
- **MAALEJ, Khaled**
  **F-75008 PARIS (FR)**
- **HAMMAN, Emmanuel**
  **F-75015 PARIS (FR)**
- **SIBERS, Jean-Philippe**
  **F-75013 PARIS (FR)**
- **POUSSET, Gérard**
  **F-75014 PARIS (FR)**

(74) Mandataire:
**Habasque, Etienne Joel Jean-François et al**
**Cabinet Lavoix**
**2, Place d'Estienne d'Orves**
**75441 Paris Cédex 09 (FR)**

(56) Documents cités:
**EP-A- 0 725 497** **FR-A- 2 786 048**

- **DEBRAY B: "A NEW DIFFERENTIAL DAPTIVE MODEM FOR MULTIPATH PROPAGATION" EUROPEAN CONFERENCE ON RADIO RELAY SYSTEMS. EDINBURGH, OCT. 11 - 14, 1993, LONDON, IEE, GB, vol. CONF. 4, 11 octobre 1993 (1993-10-11), pages 250-254, XP000479345 ISBN: 0-85296-594-X**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 474 877 B1

## Description

La présente invention concerne un dispositif modulaire de réception en diversité d'un signal modulé.

De tels dispositifs sont utilisés par exemple, pour la réception de signaux modulés par multiplexage orthogonal par division en fréquence communément appelés signaux OFDM ou COFDM.

De manière classique, des signaux numériques tels que des programmes de télévision, sont codés afin d'être émis par voie hertzienne.

La communication par voie hertzienne génère des irrégularités de propagation du fait, entre autre, de réflexions et d'échos induits par l'environnement.

Ainsi, il est possible de recevoir plusieurs flux de données correspondant à la réception d'un même signal source de plusieurs façons différentes, ce phénomène étant communément appelé réception en diversité.

La réception en diversité peut être une diversité d'espace en séparant deux récepteurs pour que les évanouissements du signal source en ces deux points soient relativement décorrélés, mais elle peut être également une diversité de polarisation, une diversité en fréquence ou une diversité temporelle ou encore une combinaison de ces techniques.

Lorsque les différents flux reçus en diversité, tous représentatifs du même signal source, sont combinés, il est possible d'obtenir un flux de données résultant de meilleure qualité que si un seul flux avait été utilisé.

Les flux reçus peuvent être combinés de plusieurs méthodes. Par exemple, on peut retenir le meilleur flux ou encore définir un seuil à partir duquel un flux peut être utilisé.

Une méthode performante de combinaison des flux reçus en diversité consiste à réaliser des additions avec pondération.

Ainsi, chaque flux se voit attribuer un indice de confiance et est traité en fonction de celui-ci, l'ensemble des flux traités étant ensuite additionné afin de délivrer un flux de données global.

La combinaison optimale ou en anglais « Maximum Ratio Combining » notée couramment MRC, permet d'obtenir le rapport signal à bruit maximal en sortie.

Cette combinaison est définie notamment dans l'article « Linear Diversity Combining Techniques » de D.G. BRENNAN, publié en juin 1959 par l'IRE (pages 1075 à 1102).

Les enseignements de cet article permettent de définir une donnée combinée ou donnée de rapport optimal égale à la source de données pondérées de chaque voie.

Les résultats obtenus à l'issue de ces combinaisons sont adressés à un décodeur à entrée pondérée tel que par exemple un décodeur de Viterbi, qui réalise un décodage classique du flux de données global.

Un dispositif mettant en oeuvre une telle méthode est également décrit dans le brevet FR-B-2 786 048.

Dans ce dispositif, chaque voie de réception délivre un indice de confiance de cette voie et des données plus ou moins amplifiées en fonction de cet indice.

Toutes les données et les indices de confiance sont utilisés lors d'une seule et même étape de combinaison délivrant un indice de confiance global et un flux de données global adaptés à un décodeur à entrées pondérées.

Ainsi, il apparaît que dans ce dispositif, l'architecture repose sur la juxtaposition de voies de traitement et sur l'utilisation d'un étage final de combinaison à entrées multiples.

De ce fait, de nombreuses fonctions sont dupliquées sur chaque voie et la fonction de sommation/pondération doit être intégrée sur chaque voie ou être réalisée par un circuit unique dimensionné spécialement, ce qui requiert une surface importante de substrat lors de la réalisation sous forme de composants électroniques.

Il apparaît donc que les dispositifs existants sont de taille et de complexité importantes et induisent un surcoût substantiel.

Le but de la présente invention est de répondre à ces problèmes en proposant un dispositif de réception modulable et optimisant le substrat électronique.

La présente invention a pour objet un dispositif de réception d'un signal hertzien, ledit dispositif comportant une pluralité de voies de réception et un décodeur à entrées pondérées, chaque voie de réception recevant en entrée un flux de données correspondant audit signal hertzien transmis et comportant un module de détermination d'un indice de confiance et un module d'égalisation, adapté pour délivrer à partir du flux de données reçu et dudit indice de confiance, un flux de données égalisées, caractérisé en ce que les voies de réception sont ordonnées et en ce que chaque voie de réception comporte un module de calcul adapté pour délivrer un indice de confiance combiné et un flux de données combinées, à partir dudit indice de confiance et dudit flux de données égalisées de la voie courante, ainsi que, pour les voies de réception suivant la première voie, à partir de l'indice de confiance combiné et du flux de données combinées de la voie de réception précédente, les sorties du module de calcul de la dernière voie constituant un indice de confiance global et un flux de données combinées global, ledit décodeur à entrées pondérées étant adapté pour traiter l'indice de confiance combiné et le flux de données combinées, issus seulement du module de calcul de la dernière voie.

Suivant d'autres caractéristiques de l'invention :

- chaque module de calcul comporte des moyens de calcul élémentaires permettant de délivrer, à partir de l'indice de confiance $CSI_i$ de la voie courante et de l'indice de confiance combiné $CCSI_{i-1}$ de la voie précédente, un indice de confiance combiné tel que $CCSI_i = CCSI_{i-1} + CSI_i$.
- le module de calcul de chaque voie comporte des moyens de calcul élémentaires permettant de définir, à partir des indices de confiance combinés $CCSI_i$ et $CCSI_{i-1}$ des voies courantes et précédentes, un coefficient de pondération $\alpha_i$ tel que $\alpha_i = CCSI_{i-1} / CCSI_i$ ainsi que son complémentaire par rapport à 1 ;
- le module de calcul de chaque voie comporte des moyens de calcul élémentaires permettant de délivrer, à partir du flux de données combinées $CZ_{i-1}$ de la voie précédente, du flux de données $Z_i$ et du coefficient de pondération $\alpha_i$ de la voie courante, un flux de données combinées $CZ_i$ tel que $CZ_i = \alpha_i \times CZ_{i-1} + (1 - \alpha_i) \times Z_i$ ;
- le module de calcul de chaque voie comporte en entrée un module de synchronisation adapté pour synchroniser entre eux le flux de données combinées et l'indice de confiance combiné délivrés par la voie de réception précédente et le flux de données et l'indice de confiance délivrés par la voie de réception courante ;
- chaque voie de réception comporte en outre des moyens de mise en forme du flux de données reçu comportant au moins l'un des éléments parmi un tuner, un amplificateur et un convertisseur ;
- le dispositif est réalisé au moins en partie à l'aide de composants programmés et/ou de composants dédiés comportant des connexions adaptées pour la réalisation des fonctions de ce dispositif ;
- il comporte au moins un microprocesseur ou micro-contrôleur ;
- il est adapté pour recevoir en entrée un signal multi-porteuse.
- ledit signal d'entrée est un signal OFDM ou COFDM ; et
- le dispositif est adapté pour la réception de signaux de télévision.

L'invention sera mieux comprise à la lecture de la description qui va suivre, donnée uniquement à titre d'exemple et faite en référence aux dessins annexés, sur lesquels :

- la figure 1 est un schéma de principe d'un dispositif de réception selon l'invention; et
- la figure 2 est un schéma de principe d'un module de calcul utilisé dans un dispositif selon l'invention.

Sur la figure 1, on a représenté schématiquement l'architecture d'un dispositif de réception en diversité d'un signal de télévision.

Ainsi que cela est représenté, le dispositif 1 comporte une pluralité de voies de réception 1 à N ordonnées.

De manière classique, chaque voie de réception i est associée à une antenne $5_i$ permettant de recevoir un flux de données, tous les flux reçus correspondant à un même signal de télévision.

Par exemple, il est possible de distribuer les antennes $5_i$ dans l'espace de sorte que l'évanouissement du signal source est différent sur chaque antenne et que les flux de données reçus soient décorrélés les uns des autres.

De même, les antennes $5_i$ peuvent être adaptées pour recevoir des polarisations différentes de sorte que chacun des flux reçus pour chacune des voies de réception 1 à N correspond au même signal initial mais avec une polarité différente.

De manière classique, chaque voie de réception i comporte en entrée des moyens de mise en forme du flux de données reçu tels que par exemple un tuner $10_i$, un amplificateur et éventuellement un convertisseur $12_i$.

Les tuners $10_i$ permettent de transposer le signal reçu dans une fréquence intermédiaire plus propice au traitement à effectuer, et les amplificateurs et convertisseurs $12_i$ permettent d'amplifier le flux reçu et de le convertir en un flux de données numériques.

Pour chaque voie i, les moyens de mise en forme délivrent en sortie un signal numérique $Y_i$ correspondant au flux de données reçu sur l'antenne $5_i$ amplifié et numérisé.

Chaque voie de réception comporte ensuite un démodulateur $14_i$ comportant un module de calcul $20_i$ qui permet de délivrer, à partir du signal $Y_i$ correspondant au flux de données reçu, un indice de confiance $CSI_i$ qui lui est relatif.

Le calcul de l'indice de confiance $CSI_i$ est fait de manière classique en déterminant le rapport signal à bruit du flux de données reçu.

Les démodulateurs $14_i$ comportent également chacun un module d'égalisation $22_i$ qui permet de délivrer un flux de données égalisées $Z_i$ à partir du signal $Y_i$ correspondant au flux de données entrant et de l'indice de confiance correspondant $CSI_i$.

Selon l'invention, chaque voie de réception comporte en outre un module de calcul $24_i$, permettant de délivrer un indice de confiance combiné $CCSI_i$ et un flux de données combinées $CZ_i$.

Chaque module de calcul $24_i$ reçoit en entrée l'indice de confiance $CSI_i$ de sa voie et le flux de données égalisées $Z_i$ de sa voie.

De plus, chaque module de calcul $24_i$ sauf le module $24_1$ de la première voie de réception, reçoit également le flux de données combinées $CZ_{i-1}$ et l'indice de confiance combiné $CCSI_{i-1}$ délivrés par le module de calcul $24_{i-1}$ de

la voix précédente.

Ainsi, le module $24_2$ reçoit les résultats délivrés par le module $24_1$ et le module $24_N$ reçoit les résultats délivrés par le module $24_{N-1}$.

Le module de calcul $24_1$ de la première voie de réception reçoit en entrée uniquement le flux de données $Z_1$ et l'indice de confiance $CSI_1$ de sa voie de réception. Les entrées prévues pour les résultats délivrés par une voie précédente sont prédéterminées et mises à zéro.

Les modules de calcul $24_i$ sont donc agencés en cascade d'une voie sur l'autre selon un agencement itératif de manière à utiliser les résultats obtenus dans une voie pour les calculs de la voie suivante.

A l'aide des signaux qu'ils reçoivent en entrée, les modules de calcul $24_i$ délivrent chacun l'indice de confiance combiné $CCSI_i$ et le flux de données combinées $CZ_i$.

Les informations délivrées par le module de calcul $24_N$ de la dernière voie de réception constituent un indice de confiance global et un flux de données combinées global correspondant à une donnée combinée à rapport optimal ou en anglais «Maximal Ratio Combining» (MRC). Ces seuls deux signaux sont adressés directement à un décodeur à deux entrées pondérées 30 du dispositif. Ce décodeur 30 peut être un décodeur de Viterbi ou un décodeur itératif dit décodeur de turbocodes et permet de délivrer un signal optimisé en fonction des flux de données reçus par chacune des voies de réception.

Un tel dispositif est particulièrement adapté à la réception de signaux comportant une pluralité de fréquences, chacune porteuse d'une partie de l'information et communément appelés signaux multi-porteuses.

Les différentes voies reçoivent alors chacune l'ensemble des porteuses et les risques de pertes d'informations liés à des atténuations sélectives sont réduits.

Notamment, dans le cadre de la réception en diversité d'un signal multiporteuses tel qu'un signal OFDM ou COFDM, chaque voie de réception reçoit un signal modulé comportant une pluralité de porteuses regroupées en symboles.

Afin de reconstituer le signal émis, les signaux sont combinés par porteuse, ainsi plusieurs signaux correspondant à la réception sur les différentes voies de la même porteuse dans le même symbole sont combinés entre eux de sorte que la dernière voie délivre un flux de données combinées global comportant le même nombre de symboles et, à l'intérieur de ceux-ci, le même nombre de porteuses que le signal émis.

Les fonctions élémentaires d'un mode de réalisation d'un module de calcul $24_i$ sont décrites plus en détail en référence à la figure 2.

Le module de calcul $24_i$ reçoit en entrée, ainsi que cela a été dit précédemment, l'indice de confiance combiné $CCSI_{i-1}$ et le flux de données combinées $CZ_{i-1}$, tous deux délivrés par la voie de réception i-1 précédente. Ce module reçoit également le flux de données égalisées $Z_i$ ainsi que l'indice de confiance $CSI_i$ correspondants à la voie courante i.

L'ensemble de ces entrées est tout d'abord introduit dans un module $32_i$ de synchronisation permettant de les synchroniser sur une même référence temporelle. De manière générale, les données issues de la voie précédente sont ajustés pour être synchronisés avec les données de la voie courante.

L'indice de confiance combiné précédent $CCSI_{i-1}$ et l'indice de confiance courant $CSI_i$ sont introduits ensuite dans un sommateur $34_i$ délivrant l'indice de confiance combiné courant $CCSI_i$ de sorte que $CCSI_i = CSI_i + CCSI_{i-1}$.

L'indice de confiance combiné $CCSI_{i-1}$ de la voie précédente est également introduit dans un diviseur $36_i$ de même que l'indice de confiance combiné courant $CCSI_i$.

Le diviseur $36_i$ délivre alors en sortie un coefficient $\alpha_i$ de pondération défini par $\alpha_i = CCSI_{i-1} / CCSI_i$.

Le coefficient $\alpha_i$ est ensuite introduit dans un soustracteur $38_i$ afin de délivrer le complémentaire de $\alpha_i$ par rapport à 1 en effectuant l'opération $1- \alpha_i$.

Par la suite, le flux de données combinées $CZ_{i-1}$ et le coefficient de pondération $\alpha_i$ sont introduits dans un multiplieur $40_i$.

De même, la donnée $Z_i$ et le complémentaire de $\alpha_i$ par rapport à 1, sont introduits dans un multiplieur $42_i$.

Les résultats des multiplieurs $40_i$ et $42_i$ sont enfin introduits dans un sommateur $44_i$ délivrant une donnée combinée courante $CZ_i$ de sorte que

$$CZ_i = \alpha_i \times CZ_{i-1} + (1 - \alpha_i) \times Z_i.$$

Ainsi, le module $24_i$ délivre un indice de confiance combiné $CCSI_i$ égal à la somme des indices de confiance de chacune des voies 1 à i et un flux de données combinées de sorte que :

$$CCSI_i = \sum_{j=1}^{i} CSI_j \text{ et}$$

$$CZ_i = \alpha_i \times CZ_{i-1} + (1 - \alpha_i) \times Z_i \text{ avec } \alpha_i = CCSI_{i-1} / CCSI_i.$$

Les équations ainsi obtenues sont des équations génériques qui peuvent s'appliquer pour toutes les voies de réception.

Ainsi, pour la première voie de réception, l'application de ces formules permet de déterminer que :

$$CCSI_1 = 0 + CSI_1 = CSI_1 \text{ et}$$

$$\alpha_1 = 0 \text{ de sorte que } CZ_1 = \alpha_1 \times 0 + (1 - \alpha_1) \times Z_1 = Z_1.$$

De même, le module de calcul $24_N$ de la dernière voie de transmission N délivre un indice de confiance combiné $CCSI_N$ égal à la somme des indices de confiance de chacune des voies 1 à N et un flux de données combinées à partir des données et des indices de confiance de chaque voie tels que :

$$CCSI_N = \sum_{j=1}^{N} CSI_j \text{ et}$$

$$CZ_N = \alpha_N \times CZ_{N-1} + (1 - \alpha_N) \times Z_N \text{ avec } \alpha_N = CCSI_{N-1} / CCSI_N.$$

Ces données constituent l'indice de confiance combiné global et le flux de données combinées global qui sont introduits dans le décodeur de viterbi 30 qui délivre en sortie un signal optimisé par rapport aux flux de données reçus.

Il apparaît donc que la donnée combinée globale de la dernière voie peut s'exprimer

$$CZ_N = \sum_{j=1}^{N} \frac{CSI_j}{CCSI_N}$$

$Z_j$ et correspond à une donnée combinée de rapport optimal tel que définie d'après les enseignements de l'article de Brennan cité précédemment.

Le signal de sortie peut ensuite être utilisé de manière classique, par exemple, ces données sont démultiplexées et décodées afin de délivrer différents types de données tels que des données audio et des données vidéo.

Avantageusement, les démodulateurs $14_1$ à $14_N$ peuvent être réalisés à l'aide d'un nombre réduit de démodulateurs associés à des mémoires tampon et utilisés de manière récursive avec toutes les voies de réception.

Les démodulateurs $14_i$ peuvent être réalisés à l'aide de composants électroniques classiques, de composants programmés de type FPGA, de composants dédiés à ces fonctions de type ASIC ou de microprocesseur tels que des DSP. De même, l'ensemble des voies de réception peuvent, toutes entières ou en parties, être réalisées à l'aide de composants programmés dont les connexions sont configurées pour la réalisation de ces fonctions.

Par ailleurs, les moyens de mise en forme des flux de donnés reçus peuvent comporter d'autres éléments que ceux décrits et peuvent être organisés de manières différentes en fonction des situations.

De plus, les fonctions élémentaires constituant les modules de calcul décrits peuvent être agencées ou réalisés différemment du mode de réalisation décrit.

Il apparaît donc que un dispositif selon l'invention, de par l'agencement itératif des voies de réception, permet de diminuer le nombre de composants utilisés et met en oeuvre une architecture modulable qui peut facilement être adaptée au nombre de voies de réception.

Par ailleurs, les différentes voies de réception sauf les premières et dernières, peuvent être combinées dans des ordres différents.

Bien que l'invention ait été écrite dans le cadre de la réception de signaux de télévision, elle s'applique également à la réception en diversité pour tout signal de transmission d'informations numériques tel que des signaux de téléphonie mobile ou tout autre signal numérique.

De même, le signal transmis peut être modulé selon différents formats tels que l'OFDM, le COFDM, le QAM, le QPSK.

## Revendications

1. Dispositif de réception d'un signal modulé, ledit dispositif comportant une pluralité de voies de réception (1 à N) et un décodeur (30) à entrées pondérées, chaque voie de réception (1 à N) recevant en entrée un flux de données correspondant audit signal modulé transmis et comportant un module ($20_i$) de détermination d'un indice de confiance ($CSI_i$) et un module d'égalisation ($22_i$), adapté pour délivrer à partir du flux de données reçu et dudit indice de confiance ($CSI_i$), un flux de données égalisées ($Z_i$), **caractérisé en ce que** les voies de réception (1 à N) sont ordonnées et **en ce que** chaque voie de réception (1 à N) comporte un module de calcul ($24_i$) adapté pour délivrer un indice de confiance combiné ($CCSI_i$) et un flux de données combinées ($CZ_i$), à partir dudit indice de confiance ($CSI_i$) et dudit flux de données égalisées ($Z_i$) de la voie courante (i), ainsi que, pour les voies de réception suivant la première voie (1), à partir de l'indice de confiance combiné ($CCSI_{i-1}$) et du flux de données combinées ($CZ_{i-1}$) de la voie de réception précédente, les sorties du module de calcul ($24_N$) de la dernière voie (N) constituant un indice de confiance global et un flux de données combinées global, ledit décodeur (30) à entrées pondérées étant adapté pour traiter l'indice de confiance combiné ($CCSI_i$) et le flux de données combinées ($CZ_i$), issus seulement du module de calcul ($24_N$) de la dernière voie (N).

2. Dispositif selon la revendication 1, **caractérisé en ce que** chaque module de calcul ($24_1$ à $24_N$) comporte des moyens de calcul élémentaires ($34_i$) permettant de délivrer, à partir de l'indice de confiance $CSI_i$ de la voie courante et de l'indice de confiance combiné $CCSI_{i-1}$ de la voie précédente, un indice de confiance combiné $CCSI_i$ tel que $CCSI_i = CSI_i + CCSI_{i-1}$.

3. Dispositif selon la revendication 2, **caractérisé en ce que** le module de calcul ($24_i$) de chaque voie comporte des moyens de calcul élémentaires ($36_i$ et $38_i$) permettant de définir, à partir des indices de confiance combinés $CCSI_{i-1}$ et $CCSI_i$ des voies courantes et précédentes, un coefficient de pondération $\alpha_i$ tel que $\alpha_i = CCSI_{i-1} / CCSI_i$ ainsi que son complémentaire par rapport à 1.

4. Dispositif selon la revendication 3, **caractérisé en ce que** le module de calcul ($24_i$) de chaque voie comporte des moyens de calcul élémentaires ($40_i$, $42_i$ et $44_i$) permettant de délivrer, à partir du flux de données combinées $CZ_{i-1}$ de la voie précédente, du flux de données $Z_i$ et du coefficient de pondération $\alpha_i$ de la voie courante, un flux de données combinées $CZ_i$ tel que $CZ_i = \alpha_i \times CZ_{i-1} + (1 - \alpha_i) \times Z_i$.

5. Dispositif selon l'une quelconque des revendications précédentes, **caractérisé en ce que** le module de calcul ($24_i$) de chaque voie comporte en entrée un module de synchronisation ($32_i$) adapté pour synchroniser entre eux le flux de données combinées ($CZ_{i-1}$) et l'indice de confiance combiné ($CCSI_{i-1}$) délivrés par la voie de réception précédente et le flux de données ($Z_i$) et l'indice de confiance ($CSI_i$) délivrés par la voie de réception courante.

6. Dispositif selon l'une quelconque des revendications précédentes, **caractérisé en ce que** chaque voie de réception (1 à N) comporte en outre des moyens ($10_i$ ; $12_i$) de mise en forme du flux de données reçu comportant au moins l'un des éléments parmi un tuner, un amplificateur et un convertisseur.

7. Dispositif selon l'une quelconque des revendications précédentes, **caractérisé en ce qu'**il est réalisé au moins en partie à l'aide de composants programmés et/ou de composants dédiés comportant des connexions adaptées pour la réalisation des fonctions de ce dispositif.

8. Dispositif selon l'une quelconque des revendications précédentes, **caractérisé en ce qu'**il comporte au moins un microprocesseur ou micro-contrôleur.

9. Dispositif selon l'une quelconque des revendications précédentes, **caractérisé en ce qu'**il est adapté pour recevoir en entrée un signal multi-porteuse.

10. Dispositif selon la revendication 9, **caractérisé en ce que** ledit signal d'entrée est un signal OFDM ou COFDM.

11. Dispositif selon l'une quelconque des revendications 9 et 10, **caractérisé en ce qu'**il est adapté pour la réception de signaux de télévision.

## Patentansprüche

1. Empfangsvorrichtung für ein moduliertes Signal, welche Vorrichtung eine Mehrzahl von Empfangskanäle (1 bis N) und einen Dekodierer (30) an gewichteten Eingängen aufweist, wobei jeder Empfangskanal (1 bis N) am Eingang einen Datenfluß empfängt, der dem übertragenen modulierten Signal entspricht, und ein Modul ($20_i$) zum Bestimmen des Vertrauensindex ($CSI_i$) und ein Ausgleichsmodul ($22_i$) aufweist, das zum Liefern eines entzerrten Datenflusses ($Z_i$) aus dem empfangenen Datenfluß und dem Vertrauensindex ($CSI_i$) eingerichtet ist, **gekennzeichnet dadurch, dass** die Empfangskanäle (1 bis N) so eingerichtet sind, dass jeder Empfangskanal (1 bis N) ein Berechnungsmodul ($24_i$) aufweist, das zum Liefern eines Kombinations-Vertrauensindex ($CCSI_i$) und eines Kombinations-Datenflusses ($CZ_i$) aus dem Vertrauensindex ($CSI_i$) und dem entzerrten Datenfluss ($Z_i$) des jeweiligen Kanales (i) eingerichtet ist, ebenso wie für die Empfangskanäle nach dem ersten Kanal (1) aus dem Kombinations-Vertrauensindex ($CCSI_{i-1}$) und dem Kombinations-Datenfluss ($CZ_{i-1}$) des vorhergehenden Empfangskanales, wobei die Ausgänge des Berechnungsmoduls ($24_N$) des letzten Kanales (N) einen Gesamt-Vertrauensindex und einen Gesamt-Kombinations-Datenfluss bilden, wobei der Dekodierer (30) an ausgeglichen Eingängen zum Verarbeiten des Kombinations-Vertrauensindex ($CCSI_i$) und des Kombinations-Datenflusses ($CZ_i$) eingerichtet ist, die nur von dem Berechnungsmodul ($24_N$) des letzten Kanales (N) ausgegeben werden.

2. Vorrichtung gemäß Anspruch 1, **gekennzeichnet dadurch, dass** jedes Berechnungsmodul ($24_1$ bis $24_N$) elementare Berechnungsmittel ($34_i$) aufweist, die es erlauben, aus dem Vertrauensindex $CSI_i$ des jeweiligen Kanals und des Kombinations-Vertrauensindex $CCSI_{i-1}$ des vorhergehenden Kanals einen Kombinations-Vertrauensindex $CCSI_i$ wie $CCSI_i = CSI_i + CCSI_{i-1}$ zu liefern.

3. Vorrichtung gemäß Anspruch 2, **gekennzeichnet dadurch, dass** das Berechnungsmodul ($24_i$) jedes Kanals elementare Berechnungsmittel ($36_i$ und $38_i$) aufweist, die es erlauben, aus dem Kombinations-Vertrauensindex $CCSI_{i-1}$ und $CCSI_i$ der jeweiligen und vorhergehenden Kanäle einen Ausgleichskoeffizienten $\alpha_i$ wie $\alpha_i = CCSI_{i-1}/CCSI_i$ so wie seinen Kehrwehrt bezüglich 1 zu definieren.

4. Vorrichtung gemäß Anspruch 3, **gekennzeichnet dadurch, dass** das Berechnungsmodul ($24_i$) von jedem Kanal elementare Berechnungsmittel ($40_i$, $42_i$ und $44_i$) aufweist, die es erlauben, aus dem Kombinations-Datenfluss $CZ_{i-1}$ des vorhergehenden Kanals, dem Datenfluss $Z_i$ und dem Ausgleichskoeffizienten $\alpha_i$ des vorhergehenden Kanals einen Kombinations-Datenfluss $CZ_i$ wie $CZ_i = \alpha_i \times CZ_{i-1} + (1-\alpha_i) \times Z_i$ zu liefern.

5. Vorrichtung gemäß einem der vorhergehenden Ansprüche, **gekennzeichnet dadurch, dass** das Berechnungsmodul ($24_i$) von jedem Kanal am Eingang ein Synchronisationsmodul ($32_i$) aufweist, das zum Synchronisieren zwischen dem Kombinations-Datenfluss ($CZ_{i-1}$) und dem Kombinations-Vertrauensindex ($CCSI_{i-1}$), die von dem vorhergehenden Empfangskanal geliefert sind, und dem Datenfluss ($Z_i$) und dem Vertrauensindex ($CSI_i$), die von dem jeweiligen Empfangskanal geliefert sind, eingerichtet ist.

6. Vorrichtung gemäß einem der vorhergehenden Ansprüche, **gekennzeichnet dadurch, dass** jeder Empfangskanal (1 bis N) außerdem Mittel ($10_i$; $12_i$) aufweist, um den empfangenen Datenfluss aufzubereiten, die wenigstens eines der Elemente Tuner, Verstärker und Wandler aufweisen.

7. Vorrichtung gemäß einem der vorhergehenden Ansprüche, **gekennzeichnet dadurch, dass** sie zumindest teilweise mit Hilfe von programmierten Komponenten und/oder Komponenten verwirklicht ist, die Verbindungen aufweisen, die zum Verwirklichen der Funktionen dieser Vorrichtung eingerichtet sind.

8. Vorrichtung gemäß einem der vorhergehenden Ansprüche, **gekennzeichnet dadurch, dass** sie zumindest einen Mikroprozessor oder Mikrocontroller aufweist.

9. Vorrichtung gemäß einem der vorhergehenden Ansprüche, **gekennzeichnet dadurch, dass** sie eingerichtet ist, um am Eingang ein Mehrträger-Signal zu empfangen.

10. Vorrichtung gemäß Anspruch 9, **gekennzeichnet dadurch, dass** das Eingangssignal ein OFDM- oder COFDM-Signal ist.

11. Vorrichtung gemäß einem der Ansprüche 9 und 10, **gekennzeichnet dadurch, dass** sie zum Empfang von Fernsehsignalen eingerichtet ist.

## Claims

1. Device for receiving a modulated signal, said device comprising a plurality of reception routes (1 to N) and a decoder (30) with weighted inputs, each reception route (1 to N) receiving as input a flow of data which corresponds to said transmitted modulated signal and comprises a module ($20_i$) for determining a confidence index ($CSI_i$) and an equalisation module ($22_i$) which is adapted for delivering, from the received flow of data and from said confidence index ($CSI_i$), a flow of equalised data ($Z_i$), **characterised in that** the reception routes (1 to N) are arranged in order and **in that** each reception route (1 to N) comprises a calculation module ($24_i$) which is adapted for delivering a combined confidence index ($CCSI_i$) and a flow of combined data ($CZ_i$), from said confidence index ($CSI_i$) and from said flow of equalised data ($Z_i$) of the current route (i) and, for the reception routes following the first route (1), from the combined confidence index ($CCSI_{i-1}$) and from the flow of combined data ($CZ_{i-1}$) of the preceding reception route, the outputs of the calculation module ($24_N$) of the last route (N) comprising an overall confidence index and an overall flow of combined data, said decoder (30) with weighted inputs being adapted for treating the combined confidence index ($CCSI_i$) and the flow of combined data ($CZ_i$), derived solely from the calculation module ($24_N$) of the last route (N).

2. Device according to claim 1, **characterised in that** each calculation module ($24_1$ to $24_N$) comprises elementary calculation means ($34_i$) which permit delivery, from the confidence index $CSI_i$ of the current route and from the combined confidence index $CCSI_{i-1}$ of the preceding route, a combined confidence index $CCSI_i$ such as $CCSI_i = CSI_i + CCSI_{i-1}$.

3. Device according to claim 2, **characterised in that** the calculation module ($24_i$) of carch route comprises elementary calculation means ($36_i$ and $38_i$) which permit definition, from combined confidence indices $CCSI_{i-1}$ and $CCSI_i$ of current and preceding routes, a weighting coefficient $\alpha_i$ such as $\alpha_i = CCSI_{i-1}/CCSI_i$ and its complementary element with respect to 1.

4. Device according to claim 3, **characterised in that** the calculation module ($24_i$) of each route comprises elementary calculation means ($40_i$, $42_i$ and $44_i$) which permit delivery, from the flow of combined data $CZ_{i-1}$ of the preceding route, from the flow of data $Z_i$ and from the weighting coefficient $\alpha_i$ of the current route, a flow of combined data $CZ_i$ such as $CZ_i = \alpha_i \times CZ_{i-1} + (1 - \alpha_i) \times Z_i$.

5. Device according to any of the preceding claims, **characterised in that** the calculation module ($24_i$) of each route comprises as input a synchronisation module ($32_i$) which is adapted for synchronising together the flow of combined data ($CZ_{i-1}$) and the combined confidence index ($CCSI_{i-1}$) delivered by the preceding reception route and the flow of data ($Z_i$) and the confidence index ($CSI_i$) delivered by the current reception route.

6. Device according to any of the preceding claims, **characterised in that** each reception route (1 to N) comprises furthermore means ($10_i$; $12_i$) for editing the received flow of data comprising at least one of the elements from a tuner, an amplifier and a convertor.

7. Device according to any of the preceding claims, **characterised in that** it is produced at least in part by means of programmed components and/or of dedicated components comprising connections which are adapted for producing the functions of this device.

8. Device according to any of the preceding claims, **characterised in that** it comprises at least one microprocessor or microcontroller.

9. Device according to any of the preceding claims, **characterised in that** it is adapted for receiving as input a multicarrier signal.

10. Device according to claim 9, **characterised in that** said input signal is an OFDM or COFDM signal.

11. Device according to any of the claims 9 and 10, **characterised in that** it is adapted for receiving television signals.

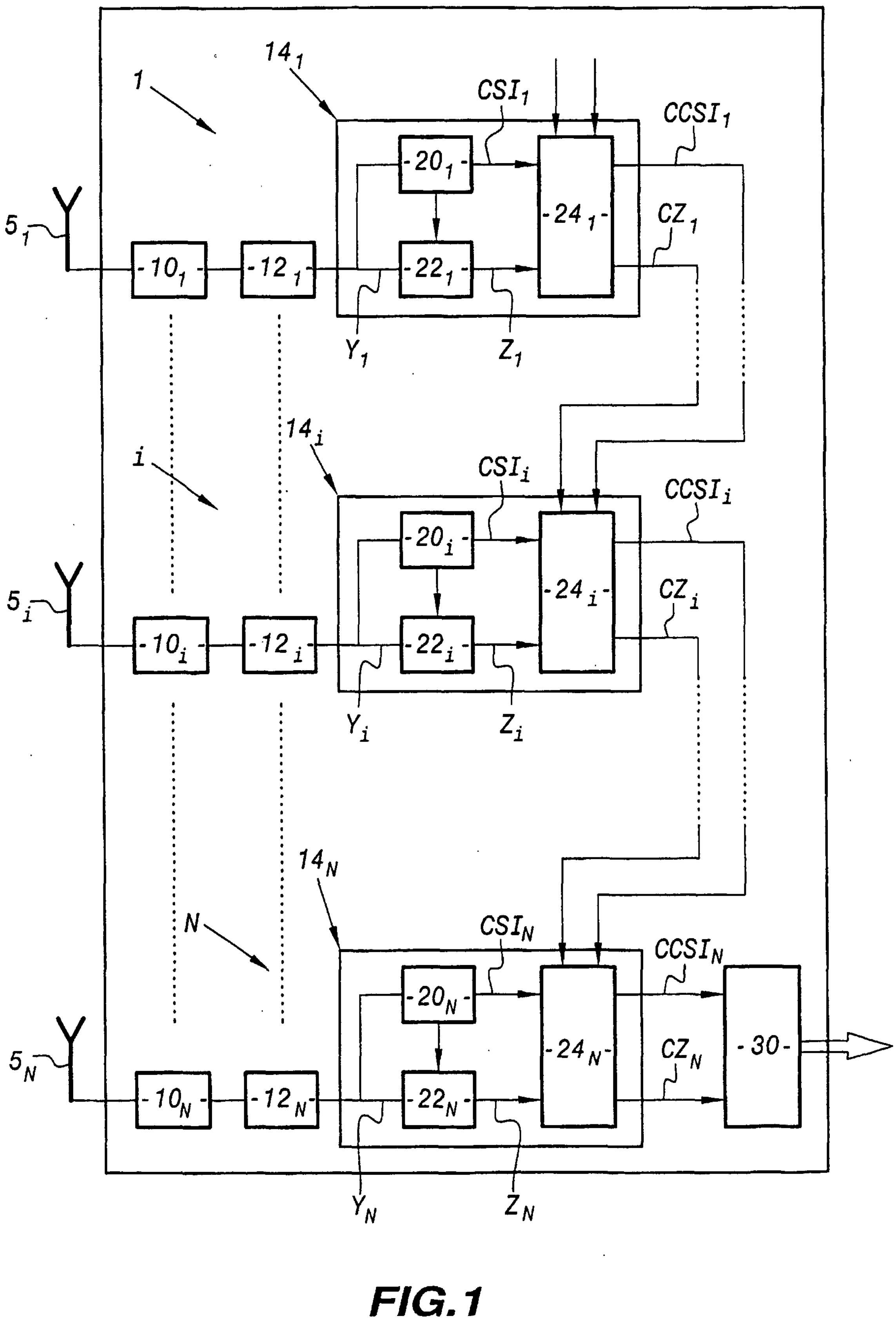
1
$14_1$
$CSI_1$
$CCSI_1$
$5_1$
$10_1$
$12_1$
$20_1$
$22_1$
$24_1$
$CZ_1$
$Y_1$
$Z_1$
i
$14_i$
$CSI_i$
$CCSI_i$
$5_i$
$10_i$
$12_i$
$20_i$
$22_i$
$24_i$
$CZ_i$
$Y_i$
$Z_i$
N
$14_N$
$CSI_N$
$CCSI_N$
$5_N$
$10_N$
$12_N$
$20_N$
$22_N$
$24_N$
$CZ_N$
30
$Y_N$
$Z_N$

FIG.1

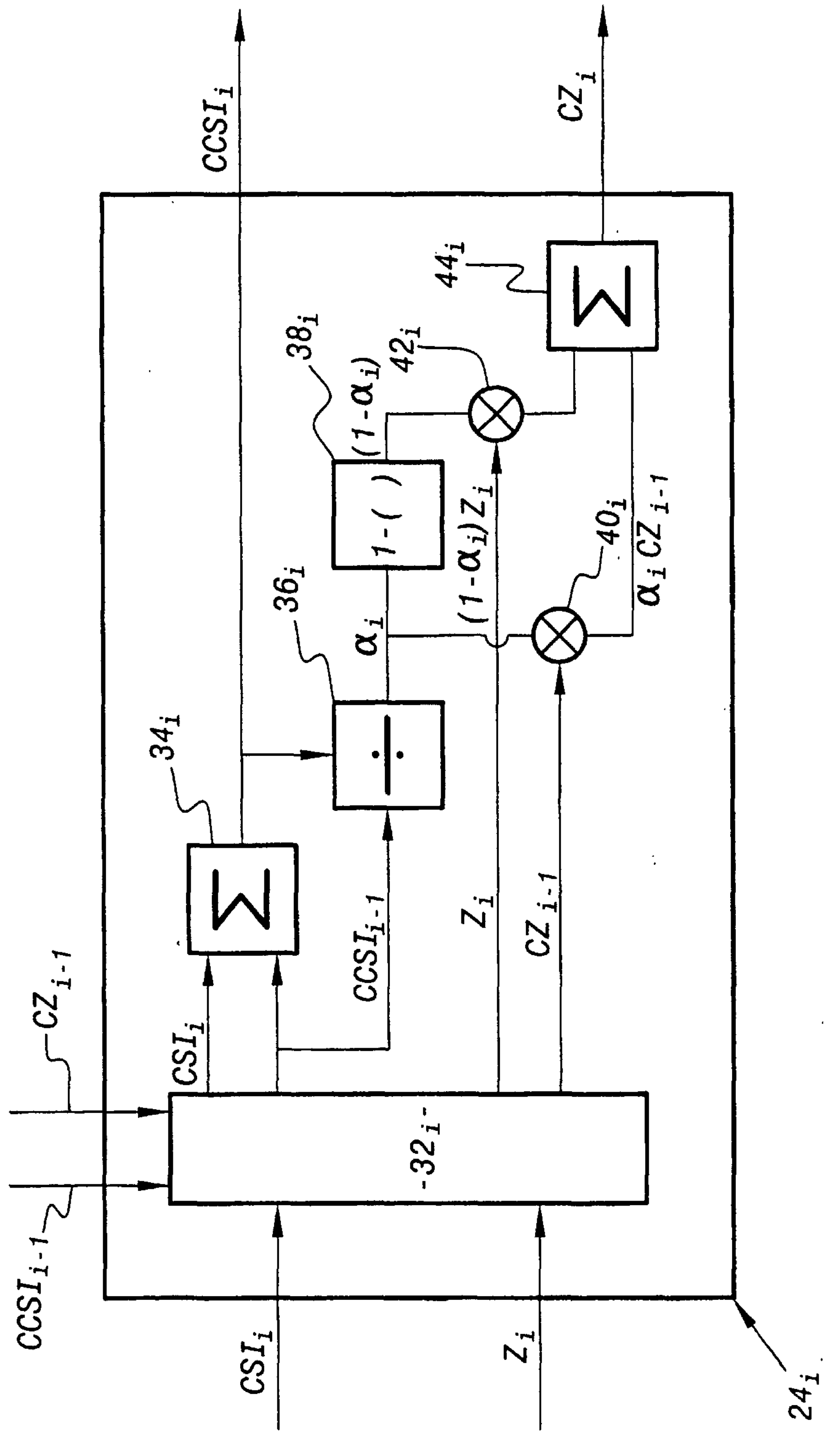
CCSIi
CZi
38i
42i
44i
(1-αi)
1-( )
36i
αi
(1-αi)Zi
40i
αi CZi-1
34i
CCSIi-1
Zi
CZi-1
CSIi
-32i-
CCSIi-1
CZi-1
CSIi
Zi
24i

FIG.2